(19) Europäisches Patentamt
European Patent Office
Office européen des brevets

(11) Veröffentlichungsnummer: **0 518 156 A2**

(12) **EUROPÄISCHE PATENTANMELDUNG**

(21) Anmeldenummer: **92109196.3**

(22) Anmeldetag: **01.06.92**

(51) Int. Cl.[5]: **C04B 24/32**, C04B 28/14, //(C04B28/14,24:24,24:28,24:32)

(30) Priorität: **14.06.91 DE 4119665**

(43) Veröffentlichungstag der Anmeldung: **16.12.92 Patentblatt 92/51**

(84) Benannte Vertragsstaaten: **AT BE CH DE DK ES FR GB IT LI NL SE**

(71) Anmelder: **BAYER AG**

**W-5090 Leverkusen 1 Bayerwerk(DE)**

(72) Erfinder: **Rasp, Christian, Dr.**
**Klutstein 13**
**W-5060 Bergisch Gladbach 2(DE)**
Erfinder: **Mazanek, Jan, Dr.**
**Haferkamp 2**
**W-5000 Köln 80(DE)**
Erfinder: **Von Gizycki, Dr.**
**Wiembachallee 24**
**W-5090 Leverkusen 3(DE)**

(54) **Verbesserte Werkstoffe auf Gipsbasis, Verfahren zu ihrer Herstellung und ihre Verwendung.**

(57) Werkstoffe auf der Basis von Gips und organischen Zusätzen werden durch einen Gehalt an Polyethern und gegebenenfalls Polymeren verbessert. Sie können auf den verschiedensten Gebieten angewendet werden, beispielsweise als Platten im Bausektor und zur Verbesserung von Putzen, Mörteln, Isoliermaterialien und anderen Baumassen, Stützverbänden und/oder Gießformen.

EP 0 518 156 A2

Die vorliegende Erfindung betrifft verbesserte Werkstoffe auf der Basis von Gips mit Zusätzen von Polyetherpolyolen und ein Verfahren zu ihrer Herstellung. Die verbesserten Werkstoffe eignen sich beispielsweise für medizinische Anwendungszwecke (z.B. für Stützverbände und Dentalmassen), für den Bausektor (z.B. als Fugendichtmassen, Putzmaterialien und zur Herstellung von Fertigteilen), zur Herstellung von dekorativen Formkörpern und für den keramischen Formenbau.

Gebrannter Gips wird als wasserhärtender Wirkstoff für die verschiedensten Anwendungszwecke eingesetzt, z.B. als Material zum Verputzen, für Stützverbände zur Ruhigstellung von Körperteilen, als Baumaterial im Innenausbau und als Modelliermasse. Gebrannter Gips härtet nach dem Tränken mit Wasser unter Abbinden. Der ausgehartete Gips besitzt jedoch auch gravierende Nachteile. Er ist z.B. nicht wasserbeständig und so hart und spröde, daß er bei mechanischer Beanspruchung häufig bricht.

Es wurden schon Versuche unternommen, die Eigenschaften von abgebundenem Gips zu verbessern. So wird in der DE-OS 33 20 217 beschrieben, daß sich Gips mit wäßrigen Polyurethan- und/oder Polyharnstoff-Dispersionen, gegebenenfalls unter Zusatz von Alkoholen, ohne vorzeitige Koagulation der Dispersion anmischen läßt und nach dem Abbinden verbesserte Wasser- und Bruchfestigkeiten aufweist. Bei derart modifiziertem Gips ist die schlechte Reproduzierbarkeit, insbesondere aufgrund von uneinheitlichen Lufteinschlüssen und das uneinheitliche Fließverhalten, nachteilig.

Vorschläge, den Gips für Anwendungen im Bauwesen durch Tränken mit Salzlösungen, Bitumen oder Kunststoffemulsionen wasseifester zu machen, sind erfolglos geblieben (siehe "Blick durch die Wirtschaft" vom 19.9.1982, Nr. 175, S. 7).

Es wurden nun Werkstoffe auf der Basis von Gips und organischen Zusätzen gefunden, die dadurch gekennzeichnet sind, daß sie Polyether enthalten.

Erfindungsgemäße Werkstoffe zeichnen sich durch verbesserte mechanische Eigenschaften, verbesserte Verarbeitbarkeit und ein erniedrigtes Wasseraufnahmevermögen aus.

Erfindungsgemäße Werkstoffe können in ausgehärtetem Zustand beispielsweise 0,02 bis 5 Gew.-% Polyether enthalten. Bevorzugt beträgt diese Menge 0,03 bis 2 Gew.-%, besonders bevorzugt 0,05 bis 1 Gew.-%.

Bezogen auf noch nicht abgebundenen Gips, z.B. auf eingesetzten gebrannten Gips oder Anhydrit, können erfindungsgemäße Werkstoffe beispielsweise unter Zusatz von 18 bis 400 Gew.-% Wasser hergestellt werden. Bevorzugt beträgt diese Menge 30 bis 100 Gew.-%, besonders bevorzugt 35 bis 70 Gew.-%.

Bei den Polyethern kann es sich beispielsweise um Anlagerungsprodukte von Ethylenoxid und/oder Propylenoxid an Startermoleküle handeln, die reaktive Wasserstoffatome enthalten. Sofern an die Startermoleküle Ethylenoxid und Propylenoxid angelagert wurden, kann diese Anlagerung gleichzeitig erfolgt sein (das ergibt eine statistische Verteilung von Ethylen- und Propylenoxid-Einheiten) oder in beliebiger Reihenfolge nacheinander (das ergibt eine blockartige Verteilung von Ethylen- und Propylenoxid-Einheiten). Es können auch Gemische aus Polyethern unterschiedlicher Zusammensetzung eingesetzt werden, z.B. Gemische aus monofunktionellen Polyethern mit polyfunktionellen Polyethern, Gemische aus statistischen Polyethern und Blockcopolyethern oder Gemische aus Polyethern der Formeln (I) bis (IV). Die erfindungsgemäß einzusetzenden Polyether können sowohl Hydroxylgruppen enthalten als auch durch Umsetzung der Hydroxylgruppen entstandene Endgruppen, z.B. Ester-, Ether-, Urethan- oder Carbonatgruppen. Sinngemäß können Aminopolyether Amid- oder Imidgruppen enthalten.

Bevorzugte Polyether entsprechen den Formeln (I) und/oder (II)

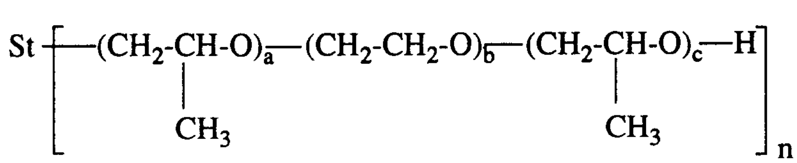

(I),

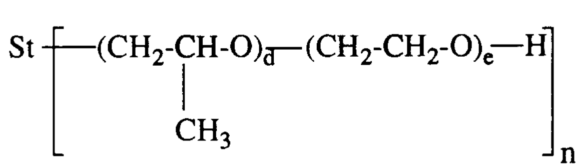

(II),

in denen

St für den Rest eines Startermoleküls, z.B. für den Rest von Propylenglykol, Trimethylolpropan, Glycerin, Sorbit, Ethylendiamin, Stearylamin, Ammoniak oder hydroxylgruppenhaltigem Polysiloxan steht,
n für die Anzahl reaktiver Wasserstofferstoffatome steht, die ursprünglich am Startermolekül vorhanden waren,
a für eine ganze oder gebrochene Zahl von 17 bis 23, vorzugsweise 19 bis 21 steht,
b für eine ganze oder gebrochene Zahl von 3 bis 6, vorzugsweise, 3 bis 4 steht,
c für eine ganze oder gebrochene Zahl von 1 bis 6, vorzugsweise 1 bis 3 steht,
d für eine ganze oder gebrochene Zahl von 17 bis 23, vorzugsweise 19 bis 22 steht und
e für eine ganze oder gebrochene Zahl von 3 bis 15 vorzugsweise 4 bis 7 steht.

Wenn eine oder mehrere der Zahlen a bis e eine gebrochene Zahl darstellt, so handelt es sich um Mittelwerte, die Gemische unterschiedlicher Moleküle der Formeln (I) und/oder (II) charakterisieren.

Weitere bevorzugte Polyether sind Produkte, die man erhält, wenn man pflanzliche oder tierische Fette und Öle (= Triglyceride von Fettsäuren) mit Ethylenoxid und/oder Propylenoxid in Gegenwart von basischen Katalysatoren umsetzt. Beispiele für dazu einsetzbare Fette und Öle sind Kokosfett, Palmkernfett, Talgfett, Schweinefett, Rapsöl, Sojaöl, Sonnenblumenöl und Distelöl. Beispiele für dazu einsetzbare basische Katalysatoren sind Alkalihydroxide und Alkoholate, insbesondere in Öl lösliche Alkoholate, wie Kaliumpropylenglykolat.

Wenn man die Fette und Öle mit Ethylenoxid und Propylenoxid umsetzt können Produkte entstehen, die den Formeln (I) oder (II) analog sind, wobei dann n allerdings eine ganze oder gebrochene Zahl von 0,5 bis 3 bedeutet und St dann für den Rest eines Glycerinmoleküls steht, der noch 2,5 bis 0 Fettsäurereste enthält.

Wenn man die Fette und Öle nur mit Ethylenoxid oder nur mit Propylenoxid umsetzt können Produkte der Formeln (III) oder (IV) entstehen.

$$St'\left[-(CH_2-CH_2-O)_f H\right]_{n'} \quad (III)$$

$$St'\left[-(CH_2-\underset{CH_3}{\underset{|}{CH}}-O)_g H\right]_{n'} \quad (IV) \quad ,$$

in denen
St' für den Rest eines Glycerinmoleküls steht, der noch 2,5 bis 0 Fettsäurereste enthält,
n' für eine ganze oder gebrochene Zahl von 0,5 bis 3 steht und
f und g jeweils eine ganze oder gebrochene Zahl von 2 bis 30, vorzugsweise 3 bis 15, bedeutet.

Sofern es sich bei n', f und g und der Zahlenangabe bei St' um gebrochene Zahlen handelt, stellen diese Mittelwerte dar, die Gemische unterschiedlicher Moleküle der Formeln (III) oder (IV) charakterisieren.

Die sich von pflanzlichen und tierischen Fetten und Ölen ableitenden Polyether können beispielsweise Molegewichte im Bereich 1 000 bis 3 000, vorzugsweise im Bereich 1 300 bis 2 500 aufweisen.

Für die vorliegende Erfindung zu verwendende Polyether sind häufig an sich bekannte Verbindungen, die im Handel bezogen oder gegebenenfalls auf an sich bekannte Weise hergestellt werden können (siehe z.B. DE-OS 27 56 770, DE-OS 33 30 197, US-PS 4 481 367, US-PS 2 979 528, US-PS 2 674 619, US-PS 3 472 781, US-PS 4 452 712, US-PS 2 677 700, EP-OS 54 953, EP-PS 47 371, EP-OS 116 564, EP-OS 109 515, DD-PS 237 178, DE-OS 22 20 338, Macromolecules 20, Seiten 3089-3091 (1987) und Technical Data on Pluronic® Polyols Kundenzirkular der Fa. BASF-Wyandotte Corp.). Die Herstellung sich von pflanzlichen und tierischen Fetten und Ölen ableitenden Polyethern ist oben und im Beispielteil beschrieben.

Die erfindungsgemäß einzusetzenden Polyether können z.B. bei der Herstellung von Werkstoffen aus Gips dem Anmischwasser zugegeben werden. Falls sie als wasserlösliche und/oder wasserdispergierbare Feststoffe vorliegen, können sie z.B. dem Anmischwasser und/oder dem Gipspulver zugegeben werden. Sie können aber auch z.B. in Form von Masterbatches-Granulaten mit Gips oder anderen, gegebenenfalls

inerten Pulvern eingesetzt werden.

Eine besondere Ausführungsform der erfindungsgemäßen Werkstoffe ist dadurch gekennzeichnet, daß sie zusätzlich Polyurethane und/oder Polyurethanharnstoffe enthalten. Erfindungsgemäße Werkstoffe dieser Ausführungsform können in ausgehärtetem Zustand beispielsweise insgesamt 0,02 bis 50 Gew.-% Polyurethane, Polyurethanharnstoffe und Polyether enthalten. Vorzugsweise beträgt diese Menge 0,05 bis 10 Gew.-%, besonders bevorzugt 0,2 bis 3 Gew.-%.

Polyurethane und/oder Polyurethanharnstoffe gelangen dabei im allgemeinen in Form einer wäßrigen Dispersion oder Lösung zum Einsatz. Der Feststoffgehalt solcher Dispersionen kann z.B. 0,5 bis 50 Gew.-% betragen. Vorzugsweise liegt er bei 1 bis 10 Gew.-%. Die insgesamt zur Herstellung solcher erfindungsgemäßer Werkstoffe einsetzbaren Wassermengen sind wie oben angegeben. Zu beachten ist nur, daß das Wasser dann ganz oder teilweise in Form der Polyurethan- und/oder Polyurethanharnstoff-Dispersion eingebracht wird.

Für diese Ausführungsform der vorliegenden Erfindung geeignete Polyurethane und/oder Polyurethanharnstoffe enthalten im allgemeinen hydrophile Gruppen. Diese können z.B. a) ionische Gruppen, b) durch eine Neutralisationsreaktion in ionische Gruppen überführbare Gruppen und/oder und c) Ethylenoxideinheiten sein, die in Polyetherketten eingebaut sind, die in dem Polyurethan bzw. Polyurethanharnstoff enthalten sind.

Im Prinzip sind alle an sich bekannten wäßrigen Polyurethan(harnstoff)dispersionen geeignet, die - gegebenenfalls infolge eines Gehaltes an Alkoholen und gegebenenfalls weiteren organischen Lösungsmitteln - weitgehend unempfindlich gegenüber Koagulation sind. Für die Herstellung geeigneter Polyurethan(harnstoff)dispersionen in Wasser sind eine Reihe von Verfahren bekannt. Eine zusammenfassende Darstellung findet sich z.B. bei D. Dieterich und H. Reiff in "Die Angewandte Makromolekulare Chemie", 26, Seiten 85-106 (1972), D. Dieterich et al. in "Angewandte Chemie", 82, Seiten 53-63 (1970), D. Dieterich et al. in J. Oil Col. Chem. Assoc. 53, Seiten 363-379 (1970), D. Dieterich in "Die Angewandte Makromolekulare Chemie", 98, Seiten 133-158 (1981) und in "Chemie und Technologie makromolekularer Stoffe" (29. Veröffentlichung der Fachhochschule Aachen zum 9. Kolloquium am 8. Mai 1981 an der FH Aachen, Fachbereich Chemieingenieurwesen). Im folgenden werden, falls nicht ausdrücklich anders vermerkt, unter dem Begriff "Polyurethan" auch harnstoffgruppenhaltige Polymere, d.h. Polyurethanharnstoffe, verstanden.

Ein bevorzugtes Herstellungsverfahren für geeignete wäßrige Polyurethandispersionen besteht darin, daß ein z.B. in einem organischen Losungsmittel gelöstes NCO-Prepolymeres mit einem Kettenverlängerungsmittel umgesetzt wird. Dabei enthält entweder das Prepolymere oder das Kettenverlängerungsmittel ionische oder zur Ionenbildung befähigte Gruppen. Im Laufe der Polyadditionsreaktion oder danach können diese zur Ionenbildung befähigten Gruppen in ionische Gruppen übergeführt werden. Gleichzeitig oder anschließend kann die Ausbildung der wäßrigen Dispersion z.B. durch Zusatz von Wasser und Abdestillieren des organischen Lösungsmittels erfolgen.

Weitere Einzelheiten zu einsetzbaren Polyurethandispersionen und deren Herstellung können z.B. der DE-OS 33 20 217 entnommen werden.

Die hydrophilen oder potentiell hydrophilen Gruppen sind in den zu verwendenden Polyurethanen im allgemeinen in solchen Mengen vorhanden, daß die Dispergierbarkeit der Polyurethane in Wasser gewährleistet ist. Der Gehalt der Polyurethane an hydrophilen Gruppierungen kann bei der alleinigen Verwendung von ionischen und/oder in ionische Gruppen überführbaren Gruppen beispielsweise 30 bis 130 Milliäquivalente pro 100 g Polyurethanfeststoff betragen. Bei der alleinigen Verwendung von Ethylenoxideinheiten als hydrophile Gruppen kann deren Gehalt in den Polyetherketten z.B. 2 bis 20 Gew.-% betragen. Falls beide Arten von hydrophilen Gruppen vorliegen, liegen in den Polyurethanen vorzugsweise 0,1 bis 40 Milliäquivalente pro 100 g Polyurethanfeststoff an ionischen und/oder in ionische Gruppen überführbaren Gruppen und gleichzeitig 0,5 bis 10 Gew.-% Polyethylenoxideinheiten innerhalb der Polyetherketten vor.

Anstelle von oder im Gemisch mit Polyurethanen und/oder Polyurethanharnstoffen können auch andere Polymere in erfindungsgemäßen Werkstoffen vorhanden sein. Auch solche anderen Polymere können z.B. in Form von an sich bekannten Produkte wie Polybutadien-, Polybutadien-Styrol-, Poly-Vinylacetat-, Polystyrol-(Meth-)acrylat-und/oder Polybutadien-Styrol-Acrylnitril-Dispersionen eingebracht werden. Im Prinzip kommen wäßrige Dispersionen aus allen miteinander copolymerisierbaren Monomeren in Frage, wobei als Monomere Butadien, Styrol, Acrylnitril, diverse Alkylacrylate, diverse Methacrylate, Maleinsäurederivate, Olefine und sonstige Vinyl- und Dienmonomere genannt seien. Von besonderem Interesse sind Vinylacetat-Ethylen-Copolymere und Kautschuklatices. Auch geeignet sind Polysiloxandispersionen, die gegebenenfalls reaktive Gruppen enthalten, sowie andere reaktionsfähige Systeme wie Polyisocyanatprepolymere, ungesättigte Polyesterharze und Epoxidharze und Emulsionen von Monomeren, die nach dem Vermischen mit Gips und Wasser zur Reaktion gebracht werden können.

Für die Herstellung dieser Dispersionen seien als olefinisch ungesättigte Monomere beispielhaft

genannt:

a) α,β-olefinisch ungesättigte Monocarbonsäuren mit 3 bis 5-C-Atomen und deren Ester bzw. Nitrile und Amide wie Acryl-, Methacryl- und Crotonsäure, Acryl- und Methacrylsäureamide, Acryl- und Methacrylnitril, Ester der Acryl- und Methacrylsäure, insbesondere solche mit gesättigten einwertigen aliphatischen oder cycloaliphatischen Alkoholen mit 1 bis 20 Kohlenstoffatomen, wie Ester der genannten Säuren mit Methyl-, Ethyl-, Propyl-, Isopropyl, n-Butyl-, Isobutyl-, Hexyl-, 2-Ethylhexyl-, Octyl-, Stearylalkohol, Cyclohexanol, Methylcyclohexanol, ferner mit Benzylalkohol, Phenol, Kresol, Furfurylalkohol, Monoester von α,β-monoolefinisch ungesättigten Monocarbonsäuren mit 3 bis 4 C-Atomen mit zweiwertigen gesättigten aliphatischen Alkoholen mit 2 bis 4 C-Atomen, wie beispielsweise 2-Hydroxylpropylacrylat, 4-Hydroxybutylacrylat, Glycidylester der Acryl- und Methacrylsäure, wie Glycidyl(meth)acrylat, Aminoalkylester und Aminoalkylamide der Acryl- und Methacrylsäure, wie
2-Aminoethyl(meth)acryl-hydrochlorid,
N,N-Dimethylaminoethyl-(meth)acrylat,
N,N-Dimethylaminopropylacrylamid.

Auch Monomere mit zwei oder mehr Doppelbindungen im Molekül können eingesetzt werden. Als solche Monomere sind z.B. Ethylenglykoldiacrylat oder -methacrylat geeignet.

b) α,β-olefinisch ungesättigte Dicarbonsäuren mit 3 bis 5 C-Atomen und ihre Derivate, wie Fumarsäure, Maleinsäure, Itaconsäure, Mono- und Diester der vorgenannten Dicarbonsäuren mit 1 bis 18 C-Atomen im Alkoholrest, wie Maleinsäuredimethylester, Maleinsäurediethylester, Maleinsäuredibutylester, Maleinsäuremonohexylester, Maleinsäuremonocyclohexylester.

c) Mono- und Diester des Vinylalkohols mit Carbonsäuren oder mit Halogenwasserstoffsäuren, Vinylether, Vinylketone, Vinylamide, wie Vinylacetat, Vinylpropionat, Vinyllaurat, Vinylstearat, Vinylbenzoat, Chlorvinylacetat, Divinyladipat, Vinylchlorid, Vinylidenchlorid, Vinylethylether, Vinylbutylether, Vinylethyl- oder Vinylisobutylether, Vinylethylketon, Vinylformamid, N-Vinylacetamid.

d) Vinylverbindungen von Aromaten und Heterocyclen, wie Styrol, α:-Methylstyrol, Vinyltoluol, p-Chlorstyrol, Divinylbenzol, 2-Vinylpyrrolidon, 2-Vinylpyridin.

e) N-Methylolether des Acrylsäure- und Methacrylsäureamids gemäß der allgemeinen Formel

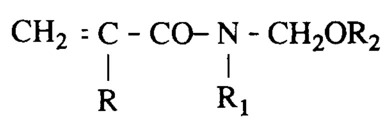

in der

R für Wasserstoff oder Methyl,

$R_1$ für Wasserstoff, Alkyl, Aralkyl oder Aryl,

$R_2$ für Alkyl oder Cycloalkyl, wie z.B. Methyl, Ethyl, n-Propyl, Isopropyl, n-Butyl, Isobutyl, Cyclohexyl stehen

(vgl. DE-B-1 035 363), ferner die nicht veretherten N-Methylolverbindungen des Acryl- und Methacrylsäureamids.

f) Mannich-Basen des Acrylsäure- und Methacrylsäureamids gemäß der allgemeinen Formel

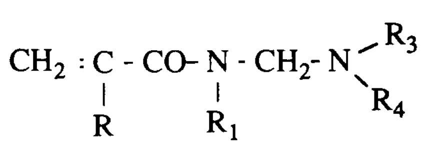

in der R und $R_1$ die gleiche Bedeutung haben wie oben und $R_3$ und $R_4$ für Alkyl, Cycloalkyl oder gemeinsam für einen heterocyclischen Rest, wie den Morpholinrest, stehen. Geeignete Verbindungen dieses Typs sind in der DE-B-1 102 404 genannt.

g) Acryl- und Methacrylsäurederivate mit einer endständigen Halogenmethylcarbonylgruppe der allgemeinen Formel

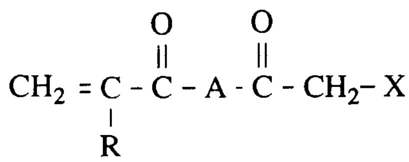

in der

R für Wasserstoff oder Methyl,

A für $-NH-CH_2-NH-$, -NH-CO-NH-,

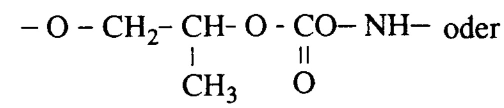

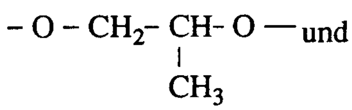

X für Chlor oder Brom setzt (vgl. BE-A-696 010).

h) Allylverbindungen, wie Triallylcyanurat, Triallylphosphat, Allylalkohol, Allylamin.

i) Monoolefinisch ungesättigte aliphatische Kohlenwasserstoffe mit 2 bis 6 C-Atomen, wie Ethylen, Propylen, Butylen, Isobutylen.

j) Konjugierte Diolefine mit 4 bis 6 C-Atomen, wie Butadien, Isopren, 2,3-Dimethylbutadien, Chlorbutadien.

k) Ferner Norbornen und Hydroxymethylnorbornen.

Vorzugsweise werden eingesetzt:

Acryl- und Methacrylsäureester mit 1 bis 12 C-Atomen im Alkoholrest, Acrylsäure, Methacrylsäure sowie die $C_2$-$C_4$-Hydroxyalkylester dieser Säuren, Styrol, Acryl- und Methacrylsäurenitril, Vinylacetat, Vinylpropionat, Vinylchlorid, Vinylidenchlorid, Ethylen oder Propylen in Verbindung mit einem oder mehreren der aufgeführten Monomeren.

Diese Monomere werden im allgemeinen bei Temperaturen von 10 bis 150 °C (co)-polymerisiert.

Als Initiatoren kommen im allgemeinen 0,05 bis 5 Gew.-%, bezogen auf die Monomeren, in Radikale zerfallende Initiatoren in Frage. Solche Initiatoren sind z.B. organische Peroxide, wie z.B. Lauroylperoxid, Cyclohexanonhydroperoxid, tert.-Butyl-peroctoat, tert.-Butyl-perpivalat, tert.-Butylperbenzoat, Dichlorbenzoylperoxid, Benzoylperoxid, Di-tert.-Butylperoxid, tert.-Butylhydroperoxid, Cumolhydroperoxid, Peroxycarbonate, wie Di-iso-propyl-peroxydicarbonat, Dicyclohexyl-peroxydicarbonat, Diisoocty-peroxydicarbonat. Sulfonylperoxide, wie Acetylcyclohexyl-sulfonylperacetat, Sulfonylhydrazide, Azoverbindungen, wie Azodiisobuttersäuredinitril sowie wasserlösliche Azoverbindungen, wie sie z.B. in der DE-A-2 841 045 beschrieben sind.

Anorganische Peroxide, wie Wasserstoffperoxid, Kaliumperoxodisulfat und Ammoniumperoxodisulfat sind ebenfalls geeignet.

Die in Radikale zerfallenden Initiatoren können allein oder auch in Verbindung mit Reduktionsmitteln oder Schwermetallverbindungen eingesetzt werden. Solche Verbindungen sind beispielsweise Natrium- oder Kaliumpyrosulfit, Ameisensäure, Ascorbinsäure, Thioharnstoff, Hydrazin- bzw. Aminderivate, Rongalit. Die Schwermetallverbindungen können sowohl in öllöslicher als auch in wasserlöslicher Form vorliegen. Wasserlösliche Schwermetallverbindungen sind beispielsweise Silbernitrat. Halogenide oder Sulfate des 2- oder 3-wertigen Eisens, Kobalts, Nickels, Salze des Titans oder Vanadins in niedrigeren Wertigkeitsstufen. Öllösliche Schwermetallverbindungen sind beispielsweise Kobaltnaphthenat oder die Acetylacetonkomplexe des Vanadins, Kobalts, Titans, Nickels oder des Eisens.

Die Polymerisation wird im allgemeinen bei pH-Werten von 2 bis 10, vorzugsweise 4 bis 9, durchgeführt, pH-Werte von unterhalb 7 sind bevorzugt beim Einsatz von kationischen Oligourethanen, pH-Werte

von oberhalb 6 bei anionischen Oligourethanen. Die Einstellung der pH-Werte innerhalb der genannten Bereiche erfolgt bei Anwesenheit von sauren Gruppen im Reaktionsgemisch oftmals durch die Zugabe von wäßrigem Ammoniak.

Zur Regulierung der Molekulargewichte der Polymeren können noch übliche Regler eingesetzt werden, z.B. n-Dodecylmercaptan, t-Dodecylmercaptan, Diisopropylxanthogendisulfid, Thioglykol und Thioglycerin. Sie werden im allgemeinen in Mengen von 0,1 bis 2 Gew.-%, bezogen auf die Monomermischung zugegeben.

Die Emulsionspolymerisation im wäßrigen Medium kann nach bekannten Polymerisationsverfahren sowohl diskontinuierlich als auch kontinuierlich oder im Zulaufverfahren durchgeführt werden.

Besonders bevorzugt sind das kontinuierliche und das Zulaufverfahren. Bei letzterem wird unter Stickstoffatmosphäre Wasser zusammen mit einem Teil oder dem gesamten Emulgatorsystem und gegebenenfalls einem Teil des Monomergemisches vorgelegt, auf die Polymerisationstemperatur erhitzt und das Monomergemisch sowie der Initiator und gegebenenfalls Emulgator innerhalb von 0,5 bis 10 Stunden, bevorzugt 1 bis 6 Stunden, zugetropft.

Nach einiger Zeit wird nachaktiviert und die Reaktion bis zu einem Umsatz von ca. 99,0 % bis 99,9 Gew.-% vervollständigt. Restmonomere sowie evtl. noch vorhandene organische Lösungsmittel können im Anschluß an die Emulsionspolymerisation evtl. mit dem vorliegenden Wasser oder einem Teil davon im Vakuum destillativ entfernt werden. Danach kann gegebenenfalls weiteres Wasser zugesetzt werden, so daß letztendlich als Verfahrensprodukte 10 bis 60 gew.-%ige, vorzugsweise 20 bis 50 gew.-%ige Dispersionen resultieren.

Die mittels Laser-Streulicht-Korrelationsspektroskopie gemessenen mittleren Teilchendurchmesser liegen je nach Reaktionsbedingungen zwischen 20 und 1 000 nm, vorzugsweise zwischen 50 und 500 nm. Dispersionen mit Teilchengrößen unter 50 nm erscheinen transparent, während solche mit größeren Teilchen zunehmend trüb erscheinen.

Die Dispersionen können mit gleichgeladenen Dispersionen abgemischt werden, wie z.B. mit Polyvinylacetat-, Polyethylen-, Polystyrol-, Polybutadien-, Polyvinylchlorid- und Polyacrylat-Dispersionen.

Schließlich können auch Füllstoffe, Weichmacher, Pigmente, Fluß- und Kieselsäuresole, Aluminium- und Ton-Dispersionen eingearbeitet werden.

Auch andere Polymere als Polyurethane und/oder Polyurethanharnstoffe können z.B. in Form von wäßrigen Dispersionen mit einem Feststoffgehalt von 1 bis 50 Gew.-% und in solchen Mengen eingesetzt werden, daß bezogen auf den ausgehärteten Werkstoff 0,02 bis 50 Gew.-% Polyurethane, Polyurethanharnstoffe, Polyether und/oder andere Polymere vorliegen.

Erfindungsgemäße Werkstoffe kann man beispielsweise herstellen, indem man zunächst in den gewünschten Mengen Wasser und Polyether oder eine wäßrige Polymerdispersion, Polyether und gegebenenfalls Wasser mischt, dann dieses Gemisch unter Rühren mit der gewünschten Menge Gips versetzt und das nunmehr vorliegende Gemisch, gegebenenfalls unter Formgebung, aushärten läßt. Geeignete Temperaturen für die Herstellung der Mischung der Komponenten sind z.B. 10 bis 40 °C, für die Aushärtung z.B. 10 bis 70 °C. Gegebenenfalls kann man nach dem Mischen von Polyether und Gips, gegebenenfalls mit einer Polymerdispersion oder gegebenenfalls Wasser, eine Vakuumentlüftung zur Entfernung von Lufteinschlüssen durchführen. Gips kann beispielsweise in Form von gebranntem Gips oder Anhydrit eingesetzt werden.

Auf diese Weise hergestellte, gegebenenfalls in bestimmter Formgebung vorliegende erfindungsgemäße Werkstoffe lassen sich beispielsweise feilen, mit dem Messer bearbeiten, schleifen, sägen, bohren, lackieren und metallisieren. Sie sind nicht brennbar. Bei Behandlung mit Wasser nehmen diese Werkstoffe Wasser auf, das sie nach dem Trocknen an der Luft praktisch wieder vollständig abgeben. Beim Lagern in Wasser behalten insbesondere Polymere enthaltende, erfindungsgemäße Werkstoffe weitgehend ihre Festigkeiten, wogegen ein in Wasser gelagerter, nur aus Gips hergestellter Formkörper bei der geringsten mechanischen Beanspruchung zerfällt.

Erfindungsgemäße Werkstoffe sind z.B. zur Herstellung von Platten für die Verwendung im Bausektor geeignet. Dabei können den Werkstoffen gegebenenfalls z.B. Füllstoffe und/oder Farbstoffe zugesetzt werden. Als Füllstoffe kommen z.B. in Betracht: jeweils bis zu 10 Gew.-%, insgesamt jedoch nicht mehr als bis zu 50 Gew.-% (bezogen auf das Gesamtgemisch), Kieselgur, Bimsstaub, Ruß, Schlämmkreide, Schiefermehl, Glaswolle, Aluminiumpulver, silikatische Materialien (z.B. Ton), Aluminosilikate, Kaoline, fein verteilter Glimmer, Glasfasern, Baumwollfasern, Polyamidfasern, Polyacrylnitrilfasern, Cellulosefasern, Polyesterfasern, Holzmehl, Baumwollinters, Polymethylenharnstoffe, Titandioxid, Aluminiumoxidhydrat, fein verteiltes Blei, Bleioxide, Eisenoxide, Azulminsäure, Stärke und/oder Papier, insbesondere zerfasertes Altpapier. Als Farbstoffe kommen z.B. in Betracht: Azo-, Anthrachinon-, Pigment- und Phthalocyaninfarbstoffe sowie optische Aufheller und fluoreszierende und/oder lumineszierende Farbstoffe.

Die Platten aus erfindungsgemäßen Werkstoffen lassen sich bei Anwendung auf dem Bausektor z.B.

kleben oder mit Fliesen, Furnieren und/oder Kunststoffen beschichten. Sie besitzen darüber hinaus hervorragende wärmeisolierende Eigenschaften.

Erfindungsgemäße Werkstoffe können im Bausektor auch zur Verbesserung von Putzen, Mörteln, Isoliermaterialien oder anderen Baumassen eingesetzt werden.

Erfindungsgemäße Werkstoffe, die Polymere enthalten, eignen sich speziell auch für Stützverbände im medizinischen Anwendungsbereich. Dazu kann man beispielsweise handelsübliche Gipsbinden mit einer wäßrigen Polymerdispersion und einem Polyetherpolyol tränken und danach den Stützverband nach herkömmlichen Techniken anfertigen.

Weiterhin sind erfindungsgemäße Wirkstoffe geeignet um Gießformen aus Gips zu verbessern, z.B. hinsichtlich deren mechanischer Stabilität.

Es ist ausgesprochen überraschend, daß erfindungsgemäße Werkstoffe im allgemeinen eine homogene Masse darstellen und reproduzierbar verbesserte mechanische Eigenschaften (z.B. Biege- und Druckfestigkeiten) aufweisen. Bei der an sich bekannten Verwendung von gelöschtem Gips als Füllstoff für Polymere treten keine analogen Eigenschaftsverbesserungen auf. Verwendet man zur Herstellung von Werkstoffen zum Zwecke des Vergleichs wäßrige Polymerdispersionen und gelöschten Gips und läßt das Wasser verdampfen, so erhält man ein in den Bruchfestigkeiten im Vergleich zum ungefülltem Polymer inhomogenes Material.

Zu dem gleichen negativen Ergebnis gelangt man, wenn man eine in ihren mechanischen Eigenschaften hervorragende Polymer-Folie in einem Gemisch aus Toluol und Isopropanol löst, diese Lösung mit gebranntem Gips versetzt und zum Abbinden des Gipses die notwendige Menge an Wasser in Ethanol zufügt. Die Mischung ist dann zunächst homogen, nach Verdampfen des Lösungsmittels entsteht jedoch eine brüchige, inhomogene Polymer-Gips-Masse ohne jegliche mechanische Festigkeit.

Daß man erfindungsgemäß die Abbindezeiten von Polymer-Gips-Werkstoffen durch Alkoholzusätze steuern kann, ist ebenfalls äußerst überraschend. So erhält man bei der Mischung von 100 g gebranntem Gips mit 100 g einer 50 gew.-%igen Polyurethanharnstoffdispersion in 20 ml Ethanol eine homogene Mischung, die nach dem Ausgießen auf eine Kunststoffplatte innerhalb von 15 Minuten abbindet. Nach 2 Tagen erreicht der Werkstoff seine Endeigenschaften hinsichtlich Bruch- und Wasserfestigkeit. Mischt man dagegen 100 g gebrannten Gips mit 100 g der gleichen 50 gew.-%igen Polyurethandispersion ohne den Zusatz von Ethanol, so bindet der Werkstoff ähnlich wie reiner Gips bereits nach 3 Minuten ab. Nach 2 Tagen besitzt der so entstandene Werkstoff seine Endeigenschaften, die nur wenig von denjenigen einer Platte abweichen, die mittels Ethanol bei ihrer Abbindung verzögert worden ist.

Die nachfolgenden Beispiele erläutern näher die vorliegende Erfindung.

## Beispiele

Eingesetzte Polyether (PE):

PE 1

Polyether der Formel (I), gestartet auf Trimethylolpropan mit a = 19, b = 3, c = 1,4, einer OH-Zahl von 40 und einem Molekulargewicht von 4 000.

PE 2

Polyether der Formel (II), gestartet auf Propylenglykol mit d = 20, e = 4, einer OH-Zahl von 41 und einem Molekulargewicht von 2 750.

PE 3

Polyether der Formel (II), gestartet auf Propylenglykol mit d = 20, e = 5, einer OH-Zahl von 40 und einem Molekulargewicht von 2 800.

PE 4

Polyether der Formel (I), gestartet auf Glycerin mit a = 19, b = 3, c = 1,4, einer OH-Zahl von 41,6 und einem Molekulargewicht von 4 500.

PE 5

Polyether der Formel (I), gestartet auf Trimethylolpropan mit a = 18, b = 3, c = 2,2, einer OH-Zahl von 42,5 und einem Molekulargewicht von 4 000.

PE 6

Polyether der Formel (I), gestartet auf Trimethylolpropan mit a = 17,5, b = 4,4, c = 1,3, einer OH-Zahl von 41,5 und einem Molekulargewicht von 4 000.

PE 7

Polyether der Formel (I), gestartet auf Propylenglykol mit a = 18,5, b = 2,9, c = 1,3, einer OH-Zahl von 44,2 und einem Molekulargewicht von 2 500.

PE 8

In einem für Oxyethylierungen ausgerüsteten Autoklaven wurden 850 g Rapsöl, das mit 9 g Natriumhydroxidpulver versetzt und durch Aufheizen auf 130 ° C im Vakuum getrocknet. Dann wurden 594 g Ethylenoxid unter gutem Rühren eindosiert. Die ersten Anteile an Ethylenoxid wurden langsam zugegeben, der Rest nach dem Anspringen der Reaktion zügig. Die Reaktion dauerte insgesamt 5 Stunden. Das so erhaltene Produkt wurde einmal bei 85 ° C mit einem Liter einer 1 %igen Natriumsulfatlösung und 2 mal mit je 500 ml Wasser gewaschen, danach wurde das Öl abgetrennt und im Vakuum getrocknet. Das so isolierte Produkt enthielt, bezogen auf Rapsöl, 41 Gew.-% Ethylenglykolethergruppen.

PE 9

In einem Rührautoklaven wurden 700 g Kokosfett vorgelegt und durch Aufheizen auf 100 ° C aufgeschmolzen. Durch gleichzeitiges Anlegen von Vakuum wurde das Kokosfett und die Apparatur vollständig getrocknet. Dann wurden 50 g Kaliumpropylenglykolat-Lösung hinzugefügt. Letztere war erhalten worden durch Auflösen von 7 g Kaliumhydroxid in 60 g Propylenglykol und Abdestillieren von Wasser und überschüssigem Propylenglykol bei geringem Vakuum. Nach Aufheizen des Ansatzes auf 125 ° C unter Stickstoff wurden 870 g Propylenoxid unter Einhaltung eines Druckes von weniger als 3 PA und gutem Rühren zulaufen gelassen. Am Ende der Reaktion wurde noch eine Stunde bei 125 ° C nachreagieren gelassen bis der Druck abgefallen war.
Das erhaltene Öl wurde wie bei PE 8 detailliert beschrieben gewaschen getrocknet und isoliert. Der Gehalt des Produkts an Propylenglykolether betrug 124 Gew.-%, bezogen auf das eingesetzte Kokosfett.

Beispiel 1

Zu 500 g entionisiertem Wasser wurden 1,3 g des Polyether PE 1 zugegeben und das Gemisch 15 Minuten bei 420 U/Min. gerührt. Anschließend wurden 800 g gebrannter handelsüblicher Formengips zugegeben, weitere 30 Sek. gerührt und das Reaktionsgemisch in Formen gegossen. Nach 1 Stunde Standzeit wurden die Formkörper (Abmessungen: 160 x 40 x 40 mm) aus den Formen entnommen, dann 2 Stunden bei Raumtemperatur, 48 Stunden bei 40 ° C und nach dem Abkühlen auf Raumtemperatur nochmals 18 Tage gelagert. Die Formkörper besaßen danach folgende Eigenschaften:
Biegefestigkeit in Anlehnung an DIN 1164: 7,1 $N/mm^2$
Druckfestigkeit in Anlehnung an DIN 1164: 94,8 $N/mm^2$
Wasseraufnahme nach 20 Min.: 34,0g (Probekörper senkrecht ins Wasser gestellt).

Diese Bestimmungsmethoden wurden bei allen Beispielen angewendet.

Vergleichsbeispiel 1

Ein unter sonst gleichen Bedingungen, jedoch ohne Zugabe des Polyether hergestellter Formkörper besaß folgende Eigenschaften:
Biegefestigkeit: 5,8 $N/mm^2$
Druckfestigkeit: 85,9 $N/mm^2$
Wasseraufnahme nach 20 Min.: 45,3 g.

Beispiele 2 bis 4

Es wurde wie im Beispiel 1 beschrieben gearbeitet, jedoch wurden verschiedene Mengen des Polyether PE 1 eingesetzt. Die erhaltenen Formkörper besaßen nachfolgende Eigenschaften:

| Beispiel Nr. | Polyether (g) | Biegefestigkeit ($N/mm^2$) | Druckfestigkeit ($N/mm^2$) | Wasseraufnahme (g) |
|---|---|---|---|---|
| 2 | 0,65 | 6,2 | 86,7 | 36,4 |
| 3 | 2,6 | 6,7 | 91,6 | 33,2 |
| 4 | 5,2 | 6,6 | 88,3 | 32,2 |

Beispiele 5 bis 8

Es wurde wie in den Beispielen 1 bis 4 beschrieben gearbeitet, jedoch wurde der Polyether PE 2 eingesetzt. Es wurden Formkörper mit den unten angegebenen Eigenschaften erhalten:

| Beispiel Nr. | Polyether (g) | Biegefestigkeit ($N/mm^2$) | Druckfestigkeit ($N/mm^2$) | Wasseraufnahme (g) |
|---|---|---|---|---|
| 5 | 0,65 | 7,1 | 86,5 | 36,2 |
| 6 | 1,3 | 7,4 | 89,3 | 33,6 |
| 7 | 2,6 | 7,4 | 88,5 | 33,5 |
| 8 | 5,2 | 6,5 | 87,3 | 32,8 |

Beispiele 9 bis 13

Es wurde wie in den Beispielen 1 bis 4 gearbeitet, jedoch wurde anstelle des Formengipses handelsüblicher Stuckgips eingesetzt. Die erhaltenen Formkörper besaßen nachfolgende Eigenschaften:

| Beispiel Nr. | Polyether (g) | Biegefestigkeit ($N/mm^2$) | Druckfestigkeit ($N/mm^2$) | Wasseraufnahme (g) |
|---|---|---|---|---|
| 9 | (PE 1)0,8 | 6,7 | 92,7 | 24,3 |
| 10 | (PE 1)1,6 | 6,7 | 92,1 | 25,3 |
| 11 | (PE 2)0,5 | 6,95 | 84,2 | 29,1 |
| 12 | (PE 2)1,0 | 7,05 | 92,7 | 26,2 |
| 13 | (PE 2)2,0 | 6,15 | 90,1 | 26,0 |

Vergleichsbeispiel 2

Es wurde wie in den Beispielen 9 bis 13 gearbeitet, jedoch ohne die Zugabe von Polyether. Es wurden Formkörper mit den nachfolgend angegebenen Eigenschaften erhalten:
Biegefestigkeit: 6,0 $N/mm^2$
Druckfestigkeit: 77 $N/mm^2$
Wasseraufnahme nach 20 Min.: 40,2 g.

Beispiel 14

Es wurde verfahren wie in Beispiel 1, jedoch wurde das Gemisch vor der Zugabe von Formengips mit 40 g einer 50 gew.-%igen wäßrigen Polyurethandispersion versetzt und weitere 2 Min. gerührt. Es wurden Formkörper mit folgenden Eigenschaften erhalten:
Biegefestigkeit: 8,8 $N/mm^2$
Druckfestigkeit: 112,4 $N/mm^2$
Wasseraufnahme nach 20 Min.: 24,9 g.

Beispiele 15 bis 29a

Es wurde wie in Beispiel 14 beschrieben gearbeitet, jedoch wurde die Polyurethandispersion in variierenden Mengen und verschiedene Polyether in variierenden Mengen eingesetzt.

| Beispiel | Polyurethan (Gew.-% fest/fest)*) | Polyether (Typ) | Polyether (Gew.-% fest/fest)*) | Biegefestigkeit ($N/mm^2$) | Druckfestigkeit ($N/mm^2$) | Wasseraufnahme (g) | |
|---|---|---|---|---|---|---|---|
| 15 | 1 | PE 1 | 0,15 | 7,9 | 112,4 | 24,4 | |
| 16 | 1 | PE 1 | 0,08 | 8,9 | 111,6 | 25,3 | |
| 17 | 5 | PE 2 | 0,15 | 8,8 | 104,8 | 18,8 | |
| 18 | 5 | PE 2 | 0,80 | 9,0 | 112,3 | 17,8 | |
| 19 | 5 | PE 1 | 0,15 | 11,3 | 115,5 | 20,8 | |
| 20 | 5 | PE 1 | 0,80 | 9,7 | 104,8 | 19,4 | |
| 21 | 1 | PE 1 | 0,15 | 8,0 | 108,7 | 25,8 | |
| 22 | 2,5 | PE 1 | 0,15 | 8,3 | 109,0 | 21,4 | |
| 23 | 5 | PE 1 | 0,08 | 8,7 | 98,3 | 21,4 | |
| 24 | 5 | PE 4 | 0,08 | 9,5 | 93,0 | 23,3 | |
| 25 | 5 | PE 5 | 0,08 | 9,5 | 100,4 | 21,4 | |
| 26 | 5 | PE 6 | 0,08 | 8,4 | 103,4 | 22,0 | |
| 27 | 5 | PE 3 | 0,08 | 8,0 | 102,2 | 23,0 | |
| 28 | 5 | PE 7 | 0,08 | 8,3 | 103,1 | 22,0 | |
| 29 | 0,15 | - | - | 5,9 | 85,8 | 42,2 | zum Vergleich |
| 29a | 1 | - | - | 5,9 | 70,1 | 32,4 | zum Vergleich |

*) fest/fest bedeutet hier und in den nachfolgenden Tabellen Polyurethan bzw. Polymer oder Polyether jeweils gerechnet als wasserfreie Substanz, bezogen auf Gips.

Beispiele 30 bis 34

Es wurde wie in Beispiel 14 beschrieben gearbeitet, jedoch wurden die Polyether PE 8 und PE 9 und anstelle von Formengips handelsüblicher Stuckgips eingesetzt.

| Beispiel | Polyurethan (Gew.-% fest/fest | Polyether (Typ) | Polyether (Gew.-% fest/fest | Biegefestigkeit ($N/mm^2$) | Druckfestigkeit ($N/mm^2$) | Wasseraufnahme (g) |
|---|---|---|---|---|---|---|
| 30 | 1,5 | PE 9 | 0,02 | 7,6 | 111,0 | 18,0 |
| 31 | - | PE 9 | 0,02 | 8,1 | 97,0 | 28,3 |
| 32 | 1,5 | PE 8 | 0,02 | 7,91 | 111,0 | 18,2 |
| 33 | - | PE 8 | 0,02 | 6,6 | 89,0 | 32,4 |
| 34*) | - | - | - | 6,3 | 78,2 | 39,1 |

*) zum Vergleich

Beispiele 35-40

Es wurde verfahren wie in Beispiel 14 beschrieben, jedoch wurden anstelle der Polyurethandispersion andere Polymerdispersionen und anstelle von Formengips handelsüblicher Stuckgips eingesetzt.

Polymertyp 1 war eine Polybutadien/Styrol enthaltende Dispersion.
Polymertyp 2 war eine Polystyrol/Butylmethacrylat enthaltende Dispersion.

| Beispiel | Polymer (Typ und Gew.-% fest/fest) | Polyether (Typ) | Polyether (Gew.-% fest/fest) | Biegefestigkeit ($N/mm^2$) | Druckfestigkeit ($N/mm^2$) | Wasseraufnahme (g) |
|---|---|---|---|---|---|---|
| 35 | 1/2,5 | PE1 | 0,15 | 7,5 | 104,2 | 21,3 |
| 36 | 1/2,5 | PE2 | 0,15 | 7,6 | 101,7 | 23,6 |
| 37 | 1/2,5 | PE9 | 0,15 | 7,7 | 102,1 | 22,3 |
| 38 | 2/2,5 | PE1 | 0,15 | 7,9 | 106,3 | 22,5 |
| 39 | 2/2,5 | PE9 | 0,15 | 7,8 | 105,0 | 23,1 |
| 40*) | - - | - - | - - | 6,3 | 78,2 | 39,1 |

*) zum Vergleich

Beispiele 41 bis 45

Es wurde wie in Beispiel 14 beschrieben gearbeitet, jedoch wurden die Polyether PE 8 und PE 9 eingesetzt und in den Beispielen 41 und 43 eine wie folgt erhaltene Polyurethandispersion:
0,25 Mol Butoxyethoxybutanol (OH-Zahl 40), 0,25 Mol Propylenoxidpolyether (MG 1 000), 0,40 Mol monosulfoniertes Butandiol-1,4, 1,2 Mol Isophorondiisocyanat und 0,20 Mol Hydroxyethylethylendiamin wurden miteinander zu einer Polyurethandispersion umgesetzt, die 68 Gew.-% Wasser enthielt.

| Beispiel | Polyurethan (Gew.-% fest/fest | Polyether (Typ) | Polyether (Gew.-% fest/fest | Biegefestigkeit ($N/mm^2$) | Druckfestigkeit ($N/mm^2$) | Wasseraufnahme (g) |
|---|---|---|---|---|---|---|
| 41 | 0,56 | PE 9 | 0,02 | 7,6 | 112,3 | 18,3 |
| 42 | - | PE 9 | 0,02 | 8,0 | 98,0 | 29,5 |
| 43 | 0,58 | PE 8 | 0,02 | 7,75 | 111,2 | 19,2 |
| 44 | - | PE 8 | 0,02 | 6,5 | 88,0 | 31,1 |
| 45*) | - | - | - | 6,3 | 78 | 39 |

*) zum Vergleich

**Patentansprüche**

1. Werkstoffe auf der Basis von Gips und organischen Zusätzen, dadurch gekennzeichnet, daß sie Polyether enthalten.

2. Werkstoffe nach Anspruch 1, dadurch gekennzeichnet, daß sie in ausgehärtetem Zustand 0,02 bis 5 Gew.-% Polyether enthalten.

3. Werkstoffe nach Ansprüchen 1 und 2, dadurch gekennzeichnet, daß die Polyether den Formeln (I) und/oder(II) entsprechen

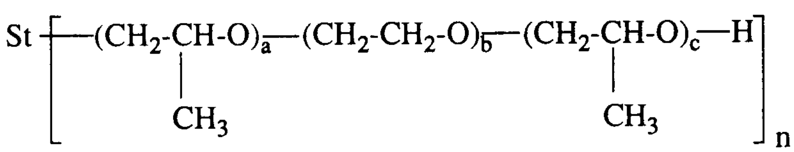

(I),

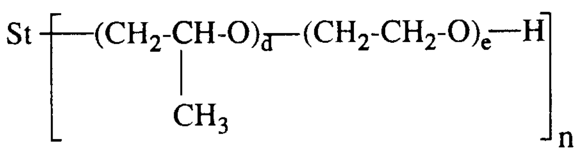

(II),

in denen
St für den Rest eines Startermoleküls steht,
n für die Anzahl reaktiver Wasserstofferstoffatome steht, die ursprünglich am Startermolekül vorhanden waren,
a für eine ganze oder gebrochene Zahl von 17 bis 23,
b für eine ganze oder gebrochene Zahl von 3 bis 6,
c für eine ganze oder gebrochene Zahl von 1 bis 6,
d für eine ganze oder gebrochene Zahl von 17 bis 23 steht und
e für eine ganze oder gebrochene Zahl von 3 bis 15 steht,

oder aus pflanzlichen oder tierischen Fetten und Ölen durch Umsetzung mit Ethylenoxid und/oder Propylenoxid in Gegenwart von basischen Katalysatoren erhalten wurden.

4. Werkstoffe nach Ansprüchen 1 bis 3, dadurch gekennzeichnet, daß sie zusätzlich Polyurethane und/oder Polyurethanharnstoffe enthalten.

5. Werkstoffe nach Anspruch 4, dadurch gekennzeichnet, daß sie in ausgehärtetem Zustand insgesamt 0,02 bis 50 Gew.-% Polyurethane, Polyurethanharnstoffe und Polyether enthalten.

6. Werkstoffe nach Ansprüchen 1 bis 3, dadurch gekennzeichnet, daß sie (auch) andere Polymere als Polyurethane und/oder Polyurethanharnstoffe enthalten.

7. Verfahren zur Herstellung von Werkstoffen der Ansprüche 1, 4 und 6, dadurch gekennzeichnet, daß man, bezogen auf noch nicht abgebundenen Gips, 18 bis 400 Gew.-% Wasser, bezogen auf den ausgehärteten Werkstoff, 0,02 bis 5 Gew.-% Polyether und gegebenenfalls soviel Polyurethane Polyurethanharnstoffe und/oder andere Polymere mischt, daß bezogen auf den ausgehärteten Werkstoff, insgesamt 0,02 bis 50 Gew.-% Polyurethane, Polyurethanharnstoffe, Polyether und andere Polymere vorliegen, dann noch nicht abgebundenen Gips zufügt und das Gemisch, gegebenenfalls unter Formgebung, aushärten läßt.

8. Verfahren nach Anspruch 7, dadurch gekennzeichnet, daß man Polyurethane, Polyurethanharnstoffe und/oder andere Polymere in Form einer wäßrigen Dispersion mit einem Feststoffgehalt von 1 bis 50 Gew.-% einsetzt.

9. Verfahren nach Ansprüchen 7 und 8, dadurch gekennzeichnet, daß man das Mischen bei 10 bis 40 °C und das Aushärten bei 10 bis 70 °C durchführt.

10. Verwendung von Werkstoffen nach Ansprüchen 1 bis 6 und/oder hergestellt nach Ansprüchen 7 bis 9 als Platten im Bausektor und zur Verbesserung von Putzen, Mörteln, Isoliermaterialien und anderen Baumassen, Stützverbänden und/oder Gießformen.